# EUROPEAN PATENT APPLICATION

(11) **EP 1 493 783 A1**
(43) Date of publication of application: **05.01.2005**
(21) Application number: 04015271.2
(22) Date of filing: 29.06.2004
(51) Int. Cl.: C09D 11/00, G03G 9/13

(54) **Pigment dispersant for non-aqueous solvent, ink composition for ink-jet system, and electrophotographic liquid developer**

(30) Priority: 30.06.2003 JP 2003187603
(71) Applicant: Fuji Photo Film Co., Ltd., Kanagawa (JP)
(72) Inventor: Horie, Seiji, Fuji Photo Film Co., Ltd., Haibara-gun Shizuoka (JP)
(74) Representative: HOFFMANN - EITLE

(57) **Abstract**

A pigment dispersant for non-aqueous solvent, which is soluble in a non-aqueous solvent and comprises a silicone graft copolymer comprising a repeating unit derived from a macromonomer soluble in a non-aqueous solvent and a repeating unit derived from a monomer, which is copolymerizable with the macromonomer and forms a non-aqueous solvent-insoluble backbone of the silicone graft copolymer, wherein the macromonomer is a silicone macromonomer (M) having a polymerizable functional group at the terminal thereof.

## Description

### FIELD OF THE INVENTION

The present invention relates to a pigment dispersant for a non-aqueous solvent, an ink composition for an ink-jet system and an electrophotographic liquid developer, and more particularly, it relates to a pigment dispersant for a non-aqueous solvent that can be applied to various kinds of pigments without limitation, can disperse a colorant coated with a fixing resin in a non-aqueous solvent in good condition and can be easily produced, an ink composition for an ink-jet system that contains the pigment dispersant for a non-aqueous solvent, has high discharge stability, is excellent in drying property on recording paper and water resistance and light resistance of a recorded image and has high abrasion resistance, and an electrophotographic liquid developer that is excellent in dispersion stability and abrasion resistance and is excellent in control of charge polarity and in time-lapse stability of charge.

### BACKGROUND OF THE INVENTION

In an electrophotographic liquid developer, an oil-based ink for an ink-jet system and various kinds of coatings and ink compositions, a practically useful pigment that exhibits sharp color tone and high coloring power is in a form of fine particles. In the case where pigment fine particles are dispersed in a non-aqueous solvent, such as a liquid developer, an oil-based ink for an ink-jet system, an offset ink, a gravure ink and a paint, it is difficult to obtain a stable dispersion, and therefore, it has been known that affinity between the pigment and the non-aqueous solvent is improved by using a pigment dispersant to stabilize the dispersion. As the pigment dispersant, a surface active agent, such as a nonionic series, an anionic series and a cationic series, a pigment derivative and a polymer pigment dispersant have been well known.

A pigment dispersant for dispersing a pigment in a nonpolar and non-aqueous solvent may be one that is soluble in the solvent or is stably dispersed as fine particles, and a surface active agent is often used therefor as described, for example, in Patent Document 1 (JP-A-5-25414 (the term "JP-A" as used herein means an "unexamined published Japanese patent application")). Specific examples thereof include a sorbitan fatty acid ester (such as sorbitan monooleate, sorbitan monolaurate, sorbitan sesquioleate and sorbitan trioleate), a polyoxyethylene sorbitan fatty acid ester (such as polyoxyethylene sorbitan monostearate and polyoxyethylene sorbitan monooleate), a polyethylene glycol fatty acid ester (such as polyoxyethylene monostearateand polyethyleneglycoldiisostearate), and a polyoxyethylene alkylphenyl ether (such as polyoxyethylene nonylphenyl ether and polyoxyethylene octylphenyl ether). In addition to these, an anionic active agent, a cationic active agent and a nonionic active agent are also used. However, these surface active agents cannot stably disperse a pigment as fine particles in a nonpolar solvent, and there is a room for improvement in dispersion stability of the dispersion thereof.

Regarding the pigment derivative, a method of mixing a compound obtained by introducing a substituent, such as sulfonic acid, a sulfonamide group, an aminomethyl group and a phthalimidomethyl group, to an organic pigment skeleton has been known as described, for example, in Patent Document 2 (JP-B-41-2466 (the term "JP-B" as used herein means an "examined Japanese patent publication")) and U.S. Patent 2,855,403. While the compound exhibits a large effect for preventing aggregation of pigment, however, the compound added is derived from a compound having the same chemical structure as the pigment so as to exhibit a strong inherent coloration, and therefore, there is significant restriction upon using with a pigment having different color tone. Consequently, it is necessary to prepare compounds corresponding to each of pigments, which brings about significant disadvantages on production of a pigment composition. Furthermore, it is necessary upon introducing the substituent that the pigment is dissolved in concentrated sulfuric acid or fuming sulfuric acid, or the reactive group is introduced by reacting chlorosulfonic acid with the pigment, which brings about significant disadvantages upon production because production equipments and production amounts are restricted due to concentrated sulfuric acid and fuming sulfuric acid, which are dangerous and difficult to be handled.

Examples of the polymer pigment dispersant include a polymer compound having a molecular weight of 1,000 or more, such as a styrene-maleic acid resin, a styrene-acrylic resin, rosin, BYK-160, 162, 164 and 182 (urethane polymer compound, produced by BYK Chemie, Inc. ) , EFKA-401 and 402 (acrylic dispersant, produced by EFKA Additives, Inc.) and Solsperse 17000 and 24000 (polyester polymer compound, produced by Zeneca Agrochemicals, Co., Ltd.). However, these compounds cannot provide effectivedispersibilityinanonpolarinsulatingsolvent, and particularly in the case where a pigment coated with a fixing resin is dispersed in a nonpolar insulating solvent, dispersibility is significantly lowered. Also, it is the current status that the polymer pigment dispersant is used in combination with the aforementioned pigment derivative having various defects.

Furthermore, in the case where a silicone organic solvent is used as the non-aqueous solvent, there is no suitable dispersant for finely dispersing a pigment and a pigment coated with a resin. Thus, the pigment is precipitated due to its large dispersion diameter, thereby lowering the printing quality, when the ink is stored for a long period of time.

Patent Document 3 (JP-A-3-188469) discloses that a graft copolymer formed from a macromonomer is used as a pigment dispersant for a non-aqueous solvent. JP-A-3-188469 discloses, for example, dispersing effect of a graft copolymer obtained by copolymerizing styrene and a stearyl methacrylate macromonomer upon dispersing a pigment coated with a fixing resin in a non-aqueous solvent, but fails to disclose a graft copolymer formed from a silicone macromonomer.

The use of a silicone graft polymer in an ink for an ink-jet system is disclosed in Patent Document 4 (JP-A-2001-342388) and Patent Document 5 (JP-A-2002-105379). In JP-A-2001-342388 and JP-A-2002-105379, a self-dispersing silicone graft polymer and a pigment are dispersed in a good solvent for the graft polymer and then mixed with a poor solvent, whereby the graft polymer is adsorbed and coated on the surface of the pigment. However, JP-A-2001-342388 and JP-A-2002-105379 fail to disclose the use of a silicon graft polymer as a pigment dispersant and a dispersing effect on a pigment coated with a resin.
- Patent Document 1:: JP-A-5-25414
- Patent Document 2:: JP-B-41-2466
- Patent Document 3:: JP-A-3-188469
- Patent Document 4:: JP-A-2001-342388
- Patent Document 5:: JP-A-2002-105379

### SUMMARY OF THE INVENTION

An object of the invention is to provide a pigment dispersant for a non-aqueous solvent that can be applied to various kinds of pigments without limitation, can disperse a colorant coated with a fixing resin in a non-aqueous solvent in good condition, and can be easily produced.

Another object of the invention is to provide an ink composition for an ink-jet system that has a pigment uniformly dispersed as fine particles, is excellent in dispersion stability of a pigment, and causes less clogging at a nozzle section with high discharge stability.

A further object of the invention is to provide an ink composition for an ink-jet system that is excellent in drying property on recording paper and water resistance and light resistance of a recorded image, has high abrasion resistance, and is capable of printing a large number of printed matters having a sharp color image with good quality without ink blur.

A still further object of the invention is to provide an electrophotographic liquid developer that is excellent in dispersion stability and abrasion resistance, is excellent in control of charge polarity and in time-lapse stability of charge, and is capable of printing a large number of printed matters having a sharp color image with good quality without ink blur.

Other objects of the invention will become apparent from the following description.

As a result of earnest investigations made by the inventors, it has been found that the objects of the invention can be attained by the following constitutions.

Specifically, the invention relates to:
(1) A pigment dispersant for non-aqueous solvent, which is soluble in a non-aqueous solvent and comprises a silicone graft copolymer comprising a repeating unit derived from a macromonomer soluble in a non-aqueous solvent and a repeating unit derived from a monomer, which is copolymerizable with the macromonomer and forms a non-aqueous solvent-insoluble backbone of the silicone graft copolymer, wherein the macromonomer is a silicone macromonomer (M) having a polymerizable functional group at the terminal thereof.
(2) The pigment dispersant for non-aqueous solvent as described in item (1), wherein the silicone macromonomer (M) is a macromonomer having a number average molecular weight of from 1 x 10³ to 4 x 10⁴ that comprises a silicone polymermainchaincomprisingarepeatingunitrepresented by the following formula (II) and has a polymerizable double bond group represented by the following formula (I) at the terminal thereof: 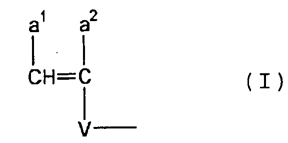 wherein V represents -COO-, -COO-(CH₂)ₘ-, -OCO-, - (CH₂)ₖ-OCO-, -OCO(CH₂)ₘ-, -(CH₂)ₖ-COO-, -O-, -CONHCOO-, - CONHCO-, -CONH(CH₂)ₘ-, -SO₂-, -CO-, -CONZ¹-, -SO₂NZ¹- or a phenylene group; Z¹ represents a hydrogen atom or a hydrocarbon group; m represents an integer of from 1 to 10; k represents an integer of from 1 to 3; a¹ and a², which may be the same or different, each represents a hydrogen atom, a halogen atom, a cyano group, a hydrocarbon group, -COO-Z² or a -COO-Z² connected via a hydrocarbon group; and Z² represents a hydrogen atom or a substituted or unsubstituted hydrocarbon group, 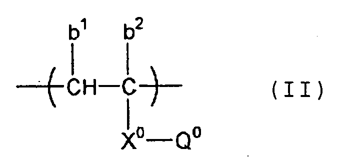 wherein X⁰ represents a linking group comprising at least one of -COO-, -OCO-, -(CH₂)ₖ-OCO-, -(CH₂)ₖ-COO-, -O-, - CONHCOO-, -CONHCO-, -SO₂-, -CO-, -CONZ³- and -SO₂NZ³-; Z³ represents a hydrogen atom or a hydrocarbon group; b¹ and b², which may be the same or different, each has the same meaning as a¹ or a² in formula (I); k represents an integer of from 1 to 3; and Q° represents an aliphatic group having from 1 to 22 carbon atoms and having a silicon atom-containing substituent.
(3) The pigment dispersant for non-aqueous solvent as described in item (1) , wherein the silicone macromonomer (M) is a macromonomer having a number average molecular weight of from 1 x 10³ to 4 x 10⁴ and represented by the following formula (V): 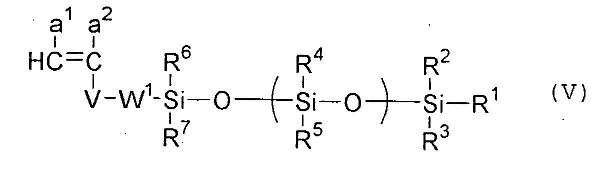 wherein V represents -COO-, -COO-(CH₂)ₘ-, -OCO-, - (CH₂)ₖ-OCO-, -OCO(CH₂)ₘ-, -(CH₂)ₖ-COO-, -O-, -CONHCOO-, - CONHCO-, -CONH(CH₂)ₘ-, -SO₂-, -CO-, -CONZ¹-, -SO₂NZ¹- or a phenylene group; Z¹ represents a hydrogen atom or a hydrocarbon group; m represents an integer of from 1 to 10; k represents an integer of from 1 to 3; a¹ and a², which may be the same or different, each represents a hydrogen atom, a halogen atom, a cyano group, a hydrocarbon group, -COO-Z² or a -COO-Z² connected via a hydrocarbon group; Z² represents a hydrogen atom or a substituted or unsubstituted hydrocarbon group; W¹ represents a single bond or a linking group comprising at least one of -C(Z⁶)(Z⁷)- (wherein Z⁶ and Z⁷ each represents a hydrogen atom, a halogen atom, a cyano group or a hydroxyl group), -(CH=CH)-, a cyclohexylene group, a phenylene group, -O-, -S-, -C(=O)-, -N(Z⁸)-, -COO-, -SO₂-, -CON(Z⁸)-, -SO₂N(Z⁸)-, -NHCOO-, -NHCONH- and -Si(Z⁸)(Z⁹)-(wherein Z⁸ and Z⁹ each represents a hydrogen atom or a hydrocarbon group); and R¹, R², R³, R⁴, R⁵, R⁶ and R⁷, which may be the same or different, each represents an alkyl group having from 1 to 10 carbon atoms, a phenyl group or an aralkyl group having from 7 to 16 carbon atoms.
(4) The pigment dispersant for non-aqueous solvent as described in item (1), (2) or (3), wherein the non-aqueous solvent is an aliphatic saturated hydrocarbon having a viscosity of 3 cSt or less, a resistivity of 10¹⁰ Ω·cm or more, and a surface tension at 25°C of from 22.5 to 28.0 mN/m.
(5) The pigment dispersant for non-aqueous solvent as described in item (1), (2) or (3), wherein the non-aqueous solvent is a silicone oil having a viscosity of from 0.5 to 20 cSt, a resistivity of 10¹⁰ Ω·cm or more, and a surface tension at 25°C of from 15 to 21 mN/m.
(6) An ink composition for ink-jet system comprising a non-aqueous solvent, a colorant, a resin that is insoluble or swellable in the non-aqueous solvent and a pigment dispersant, wherein the pigment dispersant is the pigment dispersant for non-aqueous solvent as described in item (1), (2) or (3).
(7) The ink composition for ink-jet system as described in item (6), wherein the non-aqueous solvent is an aliphatic saturated hydrocarbon having a viscosity of 3 cSt or less, a resistivity of 10¹⁰ Ω·cm or more, and a surface tension at 25°C of from 22.5 to 28.0 mN/m.
(8) The ink composition for ink-jet system as described in item (6) , wherein the non-aqueous solvent is a silicone oil having a viscosity of from 0.5 to 20 cSt, a resistivity of 10¹⁰ Ω·cm or more, and a surface tension at 25°C of from 15 to 21 mN/m.
(9) An electrophotographic liquid developer comprising a non-aqueous solvent, a colorant, a resin that is insoluble or swellable in the non-aqueous solvent, a pigment dispersant and a charge controlling agent, wherein the pigment dispersant is the pigment dispersant for non-aqueous solvent as described in item (1), (2) or (3).
(10) The electrophotographic liquid developer as described in item (9), wherein the non-aqueous solvent is an aliphatic saturated hydrocarbon having a viscosity of 3 cSt or less, a resistivity of 10¹⁰ Ω·cm or more, and a surface tension at 25°C of from 22.5 to 28.0 mN/m.
(11) The electrophotographic liquid developer as described in item (9), wherein the non-aqueous solvent is a silicone oil having a viscosity of from 0.5 to 20 cSt, a resistivity of 10¹⁰ Ω·cm or more, and a surface tension at 25°C of from 15 to 21 mN/m.

### DETAILED DESCRIPTION OF THE INVENTION

The invention will be described in detail below.

The non-aqueous solvent used in the invention is preferably those having less toxicity, less flammability and less offensive odor, and examples thereof include solvents selected from a linear or branched aliphatic hydrocarbon, an alicyclic hydrocarbon, an aromatic hydrocarbon, petroleum naphtha and a halogen-substituted compound thereof. Specific examples thereof include hexane, octane, isooctane, decane, isodecane, decalin, nonane, dodecane, isododecane, Isopar E, Isopar G, Isopar H and Isopar L, produced by Exxon Chemical Corp. , Solutol, produced by Conoco Philips Co., IP Solvent, produced by Idemitsu Petrochemical Co., Ltd., and petroleum naphtha, such as S.B.R., Shellsol 70 and Shellsol 71, produced by Showa Shell Sekiyu K.K. and Vegasol, produced by Exxon Mobile Corp., which may be used solely or as a mixture.

Preferred examples of the hydrocarbon solvent include an isoparaf fin hydrocarbon with high purity having a boiling point of from 150 to 350°C, and examples of commercial products thereof include Isopar G, H, L, M and V, trade names, and Nopar 12, 13 and 15, trade names, produced by Exxon Chemical Corp., IP Solvent 1620 and 2028, trade names, produced by Idemitsu Petrochemical Co., Ltd., Isosol 300 and 400, trade names, produced by Nippon Petrochemicals Co., Ltd., and Amsco OMS and Amsco 460 solvents, trade names, produced by American Mineral Spirits Co. These products are aliphatic saturated hydrocarbons having extremely high purity and have a viscosity of 3 cSt or less at 25°C, a resistivity of 10¹⁰ Ω·cm or more, and a surface tension of from 22.5 to 28.0 mN/m at 25°C. These also have such characteristics that they are stable with low reactivity and have less toxicity with high safety and less offensive odor. The dielectric constant thereof is from 1.5 to 20.

Examples of the halogen-substituted hydrocarbon solvent include a fluorocarbon solvent, such as a perfluoroalkane compound represented by CₙF₂ₙ₊₂, e.g., C₇F₁₆ and C₈F₁₈ (such as Fluorinert PF5080 and Fluorinert PF5070, trade names, produced by Sumitomo 3M Corp.), a fluorine inert liquid (such as Fluorinert FC Series, a trade name, produced by Sumitomo 3M Corp. ) , a fluorocarbon compound (such as Krytox GPL Series, a trade name, produced by Du Pont Japan, Ltd. ) , Freon (such as HCFC-141b, a trade name, produced by Daikin Industries, Ltd. ) , and an iodized fluorocarbon compound (such as I-1420 and I-1600, trade names, produced by Daikin Fine Chemical Laboratories, Ltd.)

As the non-aqueous solvent used in the invention, a higher fatty acid ester and a silicone oil can also be used. Specific examples of the silicone oil include a synthetic dimethylpolysiloxane having a low viscosity and a cyclic methylpolysiloxane, and examples of commercially available products thereof include KF96L and KF994, trade names, produced by Shin-Etsu Silicone Co., Ltd., and SH200, a trade name, produced by Dow Corning Toray Silicone Co., Ltd.

The silicone oil is not limited to the aforementioned examples. Various products of the dimethylpolysiloxane with wide variations in viscosity depending on molecular weights thereof are available, and those having a viscosity of from 0. 5 to 20 cSt are preferably used. The dimethylpolysiloxane has such characteristics as a resistivity of 10¹⁰ Ω·cm or more, high stability, high safety and absence of odor, similar to the isoparaffin hydrocarbon. The dimethylpolysiloxane also has such a characteristic that it has a low surface tension of from 15 to 21 mN/m at 25°C.

Examples of a solvent that can be used by mixing with the aforementioned organic solvent include an alcohol (such as methyl alcohol, ethyl alcohol, propyl alcohol, butyl alcohol and fluorinated alcohol), a ketone (such as acetone, methyl ethyl ketone and cyclohexanone), a carboxylate (such as methyl acetate, ethyl acetate, propyl acetate, butyl acetate, methyl propionate and ethyl propionate), an ether (such as diethyl ether, dipropyl ether, tetrahydrofuran and dioxane), and a halogenated hydrocarbon (such as methylene dichloride, chloroform, carbon tetrachloride, dichloroethane and methylchloroform).

The colorant used in the invention will be described in detail below.

The colorant is not particularly limited, and the commercially available organic and inorganic pigments, a pigment dispersed in an insoluble resin or the like as a dispersion medium, and a pigment having a resin grafted on the surface thereof can be used. Resin particles dyed with a dye can also be used. Specific examples of the organic and inorganic pigments exhibiting yellow color include a monoazo pigment, such as C.I. Pigment Yellow 1 (e.g., Fast Yellow G), C.I. Pigment Yellow 74, a disazo pigment, such as C.I. Pigment Yellow 12 (e.g., Disazo Yellow AAA) and C.I. Pigment Yellow 17, a non-benzidine azo pigment, such as C.I. Pigment Yellow 180, an azo lake pigment, such as C.I. Pigment Yellow 100 (e.g., Tartrazine Yellow Lake), a condensed azo pigment, such as C.I. Pigment Yellow 95 (e.g., Condensed Azo Yellow GR), an acidic dye lake pigment, such as C.I. Pigment Yellow 115 (e.g., Quinoline Yellow Lake), a basic dye lake pigment, such as C.I. Pigment Yellow 18 (e.g., Thioflavin Lake), an anthraquinone pigment, such as Flavanthrone Yellow (Y-24), an isoindolinone pigment, such as Isoindolinone Yellow 3RLT (Y-110), a quinophthalone pigment, such as Quinophthalone Yellow (Y-138), an isoindoline pigment, such as Isoindoline Yellow (Y-139), a nitroso pigment, such as C.I. Pigment Yellow 153 (e.g., Nickel Nitroso Yellow), and a metallic complex azomethine pigment, such as C.I. Pigment Yellow 117 (e.g., Copper Azomethine Yellow).

Specific examples of those exhibiting magenta color include a monoazo pigment, such as C.I. Pigment Red 3 (e.g., Toluidine Red), a disazo pigment, such as C.I. PigmentRed38 (e.g., PyrazoloneRedB), an azo lake pigment, such as C.I. Pigment Red 53:1 (e.g., Lake Red C) and C.I. Pigment Red 57:1 (e.g., Brilliant Carmine 6B) , a condensed azo pigment, such as C.I. Pigment Red 144 (e.g., Condensed Azo Red BR), an acidic dye lake pigment, such as C.I. Pigment Red 81 (e.g., Rhodamine 6G' Lake), an anthraquinone pigment, such as C.I. Pigment Red 177 (e.g., Dianthraquinonyl Red) , a thioindigo pigment, such as C.I. Pigment Red 88 (e.g., Thioindigo Bordeaux), a perynone pigment, such as C.I. Pigment Red 194 (e.g., Perynone Red), a perylene pigment, such as C.I. Pigment Red 149 (e.g., Perylene Scarlett), a quinacridone pigment, such as C.I. Pigment Red 122 (Quinacridone Magenta), an isoindolinonepigment, such as C.I. Pigment Red 180 (e.g., Isoindolinone Red 2BLT), and an alizarin lake pigment, such as C.I. Pigment Red 83 (e.g., Madder Lake).

Specific examples of those exhibiting cyan color include a disazo pigment, such as C.I. Pigment Blue 25 (e.g., Dianisidine Blue), a phthalocyanine pigment, such as C.I. Pigment Blue 15 (e.g., Phthalocyanine Blue), an acidic dye lake pigment, such as C.I. Pigment Blue 24 (e.g., Peacock Blue Lake), a basic dye lake pigment, such as C.I. Pigment Blue 1 (e.g., Victoria Pure Blue BO Lake) , an anthraquinone pigment, such as C.I. Pigment Blue 60 (e.g., Indanthrone Blue), and an alkali blue pigment, such as C.I. Pigment Blue 18 (e.g., Alkali Blue V-5:1).

Specific examples of those exhibiting black color include an organic pigment, such as an aniline black pigment, e.g., BK-1 (Aniline Black) , an iron oxide pigment, and a carbon black pigment, such as furnace black, lamp black, acetylene black and channel black. Specific examples of the carbon black pigment include MA-8, MA-10, MA-11, MA-100, MA-220, #25, #40, #260, #2600, #2700B, #3230B, CF-9, MA-100R and MA-200BR, trade names, produced by Mitsubishi Chemical Corp., Printex 75 and 90, trade names, produced by Degussa AG, and Monarch 800 and 1100, trade names, produced by Cabot Corp. Metallic powder may also be used for reproducing colors of gold, silver, copper and the like.

Processed pigments obtained by dispersing pigment fine particles in a resin, such as a rosin ester resin and a vinyl chloride-vinyl acetate res in, are commercially available and can be used in the invention. Specific examples of the commercially available processed pigment include Microlith pigments, a trade name, produced by Ciba Speciality Chemicals Corp., and preferred examples of the processed pigment include Microlith-T pigment formed by covering a pigment with a rosin ester resin.

The concentration of the colorant in the ink composition of the invention is preferably from 0.5 to 20% by weight, and particularly preferably from 2 to 15% byweight, basedon the total amount of the ink composition. In the case where the concentration of the colorant is 0.5% by weight or more, it is preferred since a sufficient print density can be obtained, and in the case where it is 20% by weight or less, it is also preferred since the ink has an appropriate viscosity to effect stable ink discharge.

The silicone graft copolymer, which is one of the featuresofthepigmentdispersantfornon-aqueoussolvent of the invention, will be described in detail below. The silicone graft copolymer used in the invention contains a repeating unit corresponding to a monomer constituting its main chain part (backbone) insoluble in the non-aqueous solvent and a repeating unit corresponding to a monomer constituting its graft part (side chain part) soluble in the non-aqueous solvent, and the monomer constituting a graft part (side chain part) includes a silicone macromonomer (M) having a polymerizable functional group at the terminal thereof. Specifically, the backbone of the silicone graft copolymer alone is insoluble in the non-aqueous solvent, although the silicone graft copolymer per se is soluble in the non-aqueous solvent.

According to a preferred embodiment of the invention, the silicone macromonomer (M) is a silicone polymer containing a repeating unit represented by the following formula (II) to form the main chain and having a polymerizable double bond group represented by the following formula (I) at the terminal of the main chain, and having a number average molecular weight of from 1 x 10³ to 4 x 10⁴.

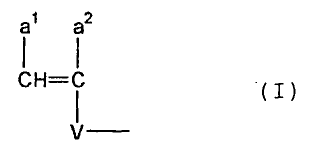

In formula (I), V represents -COO-, -COO(CH₂)ₘ-, - OCO-, -OCO(CH₂)ₘ-, -(CH₂)ₖ-OCO-, -(CH₂)ₖ-COO-, -O-, - CONHCOO-, -CONHCO-, -CONH(CH₂)ₘ-, -SO₂-, -CO-, -CONZ¹-, -SO₂NZ¹- or a phenylene group (hereinafter, a phenylene group will be represented by Ph, provided that Ph includes 1,2-, 1,3- and 1,4-phenylene groups); Z¹ represents a hydrogen atom or a hydrocarbon group; m represents an integer of from 1 to 10; k represents an integer of from 1 to 3; a¹ and a², which may be the same or different, each represents a hydrogen atom, a halogen atom, a cyano group, a hydrocarbon group, -COO-Z² or a -COO-Z² connected via a hydrocarbon group; and Z² represents a hydrogen atom or a substituted or unsubstituted hydrocarbon group.

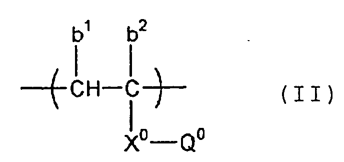

In formula (II), X⁰ represents a linking group comprising at least one of -COO-, -OCO-, -(CH₂)ₖ-OCO-, -(CH₂)ₖ-COO-, -O-, -CONHCOO-, -CONHCO-, -SO₂-, -CO-, -CONZ³- and -SO₂NZ³-; Z³ represents a hydrogen atom or a hydrocarbon group; b¹ and b², which may be the same or different, each has the same meaning as a¹ or a² in formula (I); k represents an integer of from 1 to 3; and Q° represents an aliphatic group having from 1 to 22 carbon atoms and having a silicon atom-containing substituent.

In formula (I), Z¹ in the substituent represented by V represents a hydrogen atom and a hydrocarbon group, and preferred example of the hydrocarbon group include an alkyl group having from 1 to 22 carbon atoms, which may have a substituent (such as a methyl group, an ethyl group, a propyl group, a butyl group, a heptyl group, a hexyl group, an octyl group, a decyl group, a dodecyl group, a tridecyl group, a tetradecyl group, a hexadecyl group, an octadecyl group, a 2-chloroethyl group, a 2-bromoethyl group, a 2-cyanoethyl group, a 2-methoxycarbonylethylgroup, a 2-methoxyethyl group and a 2-bromopropyl group), an alkenyl group having from 4 to 18 carbon atoms, which may have a substituent (such as a 2-methyl-1-propenyl group, a 2-butenyl group, a 2-pentenyl group, a 3-methyl-2-pentenyl group, a 1-pentenyl group, a 1-hexenyl group, a 2-hexenyl group and a 4-methyl-2-hexenyl group), an aralkyl group having from 7 to 12 carbon atoms, which may have a substituent (such as a benzyl group, a phenethyl group, a 3-phenylpropyl group, a naphthylmethyl group, a 2-naphthylethyl group, a chlorobenzyl group, a bormobenzyl group, a methylbenzyl group, an ehtylbenzyl group, a methoxybenzyl group, a dimethylbenzyl group and a dimethoxybenzyl group), an alicyclic group having from 5 to 8 carbon atoms, which may have a substituent (such as a cyclohexyl group, a 2-cyclohexylethyl group and a 2-cyclopentylethyl group), an aromatic group having from 6 to 12 carbon atoms, which may have a substituent (such as a phenyl group, a naphthyl group, a tolyl group, a xylyl group, a propylphenyl group, a butylphenyl group, an octylphenyl group, a dodecylphenyl group, a methoxyphenyl group, an ethoxyphenyl group, a butoxyphenyl group, a decyloxyphenyl group, a chlorophenyl group, a dichlorophenyl group, abromophenyl group, a cyanophenyl group, an acetylphenyl group, a methoxycarbonylphenyl group, an ethoxycarbonylphenyl group, a butoxycarbonylphenyl group, an acetamidophenyl group, a propioamidophenyl group and a dodecyloylamidophenyl group), and a group derived from a bridged hydrocarbon group having from 5 to 18 carbon atoms (such as groups derived from bicyclo [1,1,0]butane, bicycle[3,2,1]butane, bicyclo[5,2,0]nonane, bicyclo[4,3,2]undecane and adamantane).

In the case where V represents -C₆H₄-, the benzene ring may have a substituent. Examples of the substituent include a halogen atom (such as a chlorine atom and a bromine atom) and an alkyl group (such as a methyl group, an ethyl group, a propyl group, a butyl group, a chloromethyl group and a methoxymethyl group).

a¹ and a², which may be the same or different, each preferably represents a hydrogen atom, a halogen atom (such as a chlorine atom and a bromine atom), a cyano group, an alkyl group having from 1 to 3 carbon atoms (such as a methyl group, an ethyl group and a propyl group), -COO-Z² or a -CH₂COO-Z² (wherein Z² preferably represents a hydrogen atom, an alkyl group having from 1 to 18 carbon atoms, an alkenyl group, an aralkyl group, an alicyclic group or an aryl group, which may have a substituent. Specifically, these groups have the same meanings as those described for Z¹ above).

In formula (II), X⁰ represents a linking group containing at least one of -COO-, -OCO-, -(CH₂)ₖ-OCO-, -(CH₂)ₖ-COO-, -O-, -CONHCOO-, -CONHCO-, -SO₂-, -CO-, -CONZ³- and -SO₂NZ³-. Q⁰ represents an aliphatic group having from 1 to 22 carbon atoms and having a silicon atom-containing substituent. The silicon atom-containing substituent preferably has a siloxane structure (or a silyloxy structure) or a silyl group. Z³ has the same meaning as that described for Z¹ above.

b¹ and b², which may be the same or different, each has the same meaning as a¹ or a² in formula (I). Preferred examples of b¹ and b² are same as those described for a¹ or a² in formula (I). Preferred examples of the group represented by a¹ or a² in formula (I) or b¹ or b² in formula (II) include a hydrogen atom and a methyl group.

Ofthesiliconemacromonomerscontainingarepeating unit represented by formula (II) to form the main chain and having a polymerizable double bond group represented by formula (I) at the terminal of the main chain, those more preferred are represented by the following formula (III):

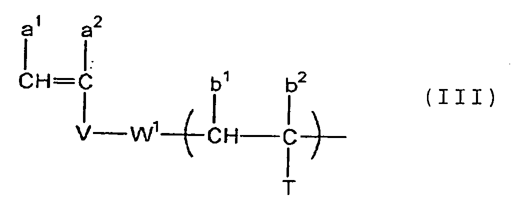

In formula (III), a¹, a², b¹ and b² have the same meanings as those described in formulae (I) and (II).

T represents -X⁰-Q⁰ in formula (II), and X⁰ and Q⁰ have the same meanings as those described in formula (II).

W¹ represents a single bond or a linking group selected from -C(Z⁶)(Z⁷)- (wherein Z⁶ and Z⁷ each represents a hydrogen atom, a halogen atom (such as a fluorine atom, a chlorine atom and a bromine atom), a cyano group or a hydroxyl group), -(CH=CH)-, a cyclohexylene group (hereinafter, a cyclohexylene group will be represented by Cy, provided that Cy includes 1,2-, 1,3- and 1,4-cyclohexylene groups), -Ph-, -O-, -S-, -C(=O)-, -N(Z⁸)-, -COO-, -SO₂-, -CON(Z⁸)-, -SO₂N(Z⁸)-, - NHCOO-, -NHCONH-, -Si(Z⁸)(Z⁹)- (wherein Z⁸ and Z⁹ each represents a hydrogen atom or a hydrocarbon group having the same meaning as defined for Z¹) and a combination thereof.

According to another preferred embodiment of the invention, the siliconemacromonomer (M) is amacromonomer having a number average molecular weight of from 1 x 10³ to 4 x 10⁴ and represented by the following formula (V):

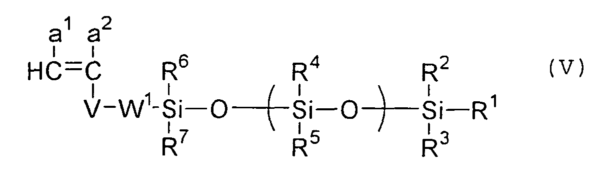

In formula (V), a¹, a² and V have the same meanings as those described in formulae (I).

W¹ has the same meaning as that described in formulae (III).

R¹, R², R³, R⁴, R⁵, R⁶ and R⁷, which may be the same or different, each represents an alkyl group having from 1 to 10 carbon atoms, a phenyl group or an aralkyl group having from 7 to 16 carbon atoms.

Particularly preferred examples of the groups represented by X⁰, V, a¹, a², b¹ and b² in formulae (I), (II), (III) and (V) are shown below.

Particularly preferred examples of the group represented by X⁰ include a linking group containing at least one of -COO-, -OCO-, -O-, -CH₂COO- and -CH₂OCO-, those of the group represented by V include the aforementioned linking groups, wherein Z¹ represents a hydrogen atom, and those of the groups represented by a¹, a², b¹ and b² include a hydrogen atom and a methyl group, respectively.

Of the silicone macromonomers (M) according to the invention, the silicone macromonomer represented by formula (V) is particularly preferred. Specific examples of the silicone macromonomer represented by formula (V) are shown below, but the invention is not limited thereto. 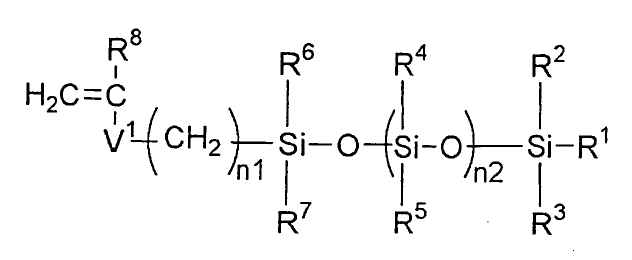 wherein V¹ represents -COO- or -CONH-, n1 represents an integer of from 1 to 10, n2 represents an integer of from 10 to 500, R¹ to R⁷ each represents -CₙH₂ₙ₊₁ (wherein n represents an integer of from 1 to 10) or -(CH₂)ᵣ-Ph (wherein r represents an integer of from 0 to 10, and Ph represents a phenyl group) , and R⁸ represents a hydrogen atom or a methyl group.

Preferred examples of commercial products of the silicone macromonomer include X-24-8210, X-22-174DX and X-22-2426, trade names, produced by Shin-Etsu Chemical Co., Ltd., FM-0711, FM-0721 and FM-0725, trade names, produced by Chisso Corp., and AK-5, AK-30 and AK-32, trade names, produced by Toagosei Co., Ltd.

The silicone macromonomer (M) in the invention can be produced by known synthes is methods. Examples thereof include (1) a method using an ion polymerization method, in which a living polymer is obtained by anion polymerization or cation polymerization, and various reagents are reacted with a terminal of the living polymer to produce the macromonomer, (2) a method using a radical polymerization method, in which an oligomer having a terminal reactive group is obtained by radical polymerization by using a polymerization initiator and/or a chain transfer agent containing a reactive group, such as a carboxyl group, a hydroxyl group or an amino group, in the molecule, and various reagents are reacted with the oligomer to produce the macromonomer, and (3) a method using a polyaddition condensation method, in which an oligomer is obtained by polyaddition or polycondensation, and a polymerizable double bond group is introduced into the oligomer in a similar manner to the aforementioned radical polymerization method.

More specifically, the macromonomer can be synthesized according to the methods described in the following literatures and reviews, for example, P. Dreyfuss and R.P. Quirk, Encycl. Polym. Sci. Eng., vol. 7, p. 551 (1987), P.F. Rempp and E. Franta, Adv. Polym. Sci., vol. 58, p. 1 (1984), V. Percec, Appl. Polym. Sci., vol. 285, p. 95 (1984), R. Asami and M. Takagi, Macromol. Chem. Suppl., vol. 12, p. 163 (1985), P. Rempp, et al., Macromol. Chem. Suppl., vol. 8, p. 3 (1987), Y. Kawakami, Kagaku Kogyo (Cheimcal Industry), vol. 38, p. 56 (1987), T. Yamashita, Kobunshi (Polymer), vol. 31, p. 988 (1982), S. Kobayashi, Kobunshi (Polymer), vol. 30, p. 625 (1981), T. Higashimura, Nippon Secchaku Kyokaishi (Journal of the Adhesion Society of Japan), vol., 18, p. 536 (1982), K. Ito, Kobunshi Kako (Polymer Processing), vol. 35, p. 262 (1986) and K. Azuma and T. Tsuda, Kino Zairyo (Functional Materials), Nos. 10, 5 (1987), and the references and patents cited therein.

The molecular weight of the silicone macromonomer (M) in the invention is preferably from 1 x 10³ to 4 x 10⁴, and more preferably from 1 x 10³ to 2 x 10⁴, in terms of number average molecular weight as the polystyrene conversion in a GPC method. In the case where the molecular weight is 1 x 10³ or more, good dispersibility is obtained, and good discharge property can be obtained without nozzle clogging. In the case where the molecular weight is 4 x 10⁴ or less, solubility in a non-aqueous solvent is ensured to provide satisfactory dispersion effect.

The amount of the silicone macromonomer (M) used in the silicone graft copolymer is not particularly restricted but preferably from 5 to 95% by weight based on the total polymerization components for forming the silicone graft copolymer.

In the silicone graft copolymer, the monomer constituting the main chain part insoluble in a non-aqueous solvent is a monomer that forms a polymer insoluble in the non-aqueous solvent by homopolymerization thereof. The monomer capable of copolymerizable with the silicone macromonomer (M) is preferably a monomer represented by the following formula (IV). The monomer represented by formula (IV) is such a monomer that is capable of forming a copolymerization component of the graft copolymer together with the aforementioned silicone macromonomer.

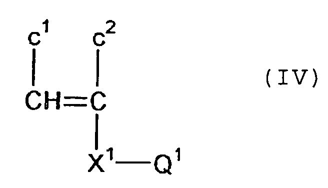

In formula (IV), X¹ has the same meaning as V in formula (II), and preferably -COO-, -OCO-, -CH₂OCO-, -CH₂COO-, -O- or -Ph-. Q¹ preferably represents a hydrogen atom, an aliphatic group having from 1 to 22 carbon atoms or an aromatic group having from 6 to 12 carbon atoms, and specific examples thereof include aliphatic groups and aromatic groups same as those described for Z¹ in formula (I). c¹ and c², which may be the same or different, each has the same meaning as a¹ or a² in formula (I), and particularly preferably one of c¹ and c² represents a hydrogen atom.

Preferred specific examples of the monomer represented by formula (IV) include methyl methacrylate, ethyl methacrylate, isopropyl methacrylate, styrene and vinyltoluene.

The silicone graft copolymer of the invention may further contain other monomers capable of being copolymerized with the aforementioned monomers, as a copolymerization component. A monomer having two or more polymerizable functional groups may also be used in combination. Examples of the other monomer include acrylonitrile, methacrylonitrile, acrylamide, methacrylamide, hydroxyethyl methacrylate, a dialkylaminoethyl methacrylate (such as dimethylaminoethyl methacrylate), styrene, chlorostyrene, bromostyrene, vinylnaphthalene, a heterocyclic compound having a polymerizable double bond group (such as vinylpyridine, vinylimidazoline, vinylthiophene, vinyldioxane and vinylpyrorridone), an unsaturated carboxylic acid (such as acrylic acid, methacrylic acid, itaconic acid, crotonic acid and maleic acid), itaconic anhydride and maleic anhydride.

The monomer having two or more polymerizable functional groups includes monomers having two or more same or different polymerizable functional groups. Examples of the monomer having the same polymerizable functional groups include a styrene derivative, such as divinylbenzene and trivinylbenzene; an ester of methacrylic acid, acrylic acid or crotonic acid with a polyhydric alcohol (such as ethylene glycol, diethylene glycol, triethylene glycol, polyethylene glycol #200, #400 and #600, 1,3-butylene glycol, neopentyl glycol, dipropylene glycol, polypropylene glycol, trimethylolpropane, trimethylolethane and pentaerythritol) or a polyhydroxyphenol (such as hydroquinone, resorcin, catechol and derivatives thereof); a vinyl ether or an allyl ether with the polyhydric alcohol or the polyhydroxyphenol; a vinyl ester, an allyl ester, a vinylamide or an allylamide of a dibasic acid (such as malonic acid, succinic acid, glutaric acid, adipic acid, pimelic acid, maleic acid, phthalic acid and itaconic acid) ; and a condensate of a polyamine (such as ethylenediamine, 1,3-propylenediamine and 1,4-butylenediamine)withacarboxylicacid havingavinyl group (such as methacrylic acid, acrylic acid, crotonic acid and allylacetic acid).

Examples of the monomer having different polymerizable functional groups include an ester derivative or an amide derivative containing a vinyl group of a carboxylic acid having a vinyl group (such as methacrylic acid, acrylic acid, methacryloylacetic acid, acryloylacetic acid, methacryloylpropionic acid, acryloylpropyonic acid, itaconyloylacetic acid, itaconyloylpropyonic acid and a reaction product of a carboxylic anhydride and an alcohol or amine (such as allyoxycarbonylpropionic acid, allyloxycarbonylacetic acid, 2-allyloxycarbonylbenzoic acid and allylaminocarbonylpropionic acid)), with examples of the ester derivative and the amide derivative including vinyl methacrylate, vinyl acrylate, vinyl itaconate, allyl methacrylate, allyl acrylate, allyl itaconate, vinyl methacryloylacetate, vinyl methacryloylpropionate, allyl methacryloylpropionate, vinyl methacrylate oxycarbonylmethyl ester, vinyl acrylate oxycarbonylmethyl oxycarbonylethylene ester, N-allylacrylamide, N-allylmethacrylamide, N-allyitaconamide and methacryloylpropionic acid allylamide; and a condensate of aminoalcohol (such as aminoethanol, 1-aminopropanol, 1-aminobutanol, 1-aminohexanol and 2-aminobutanol) and a carboxylic acid having a vinyl group.

The other monomers than the monomer represented by formula (IV) may be any appropriate copolymerizable monomer, and the proportion of the other monomer is preferably 30% by weight or less based on the total polymerization components of the silicone graft copolymer of the invention. Inparticular, the amount of the monomer having two or more polymerizable functional groups is preferably 10% by weight or less based on the total monomers.

A production method for the silicone graft copolymer of the invention will be described. The silicone graft copolymer of the invention can be produced by copolymerizing the silicone macromonomer, preferably the silicone macromonomer containing a repeating unit represented by formula (II) to form the main chain and having a polymerizable double bond group represented by formula (I) at the terminal of the main chain or the silicone macromonomer represented by formula (V) with the monomer forming the main chain, preferably, the monomer represented by formula (IV), and if desired, with other monomers. The polymerization method includes conventional methods, such as solution polymerization, suspension polymerization, precipitation polymerization and emulsion polymerization. In the solution polymerization, for example, the monomers (including the macromonomer) are added to a solvent, such as benzene and toluene, in a prescribed ratio, and a copolymer solution is obtained by using a radical polymerization initiator, such as azobisisobutyronitrile, benzoyl peroxide and lauryl peroxide. The solution is then dried or added to a poor solvent to obtain a desired copolymer. In the suspension polymerization, the monomers (including the macromonomer) are suspended in the presence of a dispersant, such as polyvinyl alcohol and polyvinylpyrrolidone, and a copolymer can be obtained in the presence of a radical polymerization initiator. In the polymerization procedures, a chain transfer agent, such as a mercaptan compound, e.g., laurylmercaptan, may be used for adjusting the molecular weight.

The silicone graft copolymer of the invention preferably has a weight average molecular weight of from 1 x 10⁴ to 5 x 10⁵, and more preferably from 2 x 10⁴ to 1 x 10⁵, as the polystyrene conversion in a GPC method. In the case where the molecular weight is 1 x 10⁴ or more, good dispersibility is obtained, and good discharge property can be obtained without nozzle clogging. In the case where the molecular weight is 5 x 10⁵ or less, solubility in a non-aqueous solvent is ensured to provide satisfactory resistance to nozzle clogging. The silicone graft copolymer of the invention preferably has a glass transition temperature of 5°C or higher. In the case where the glass transition temperature is 5°C or higher, the graft copolymer can be easily handled without blocking.

Specific examples of the silicone graft copolymer of the invention are shown below, but the invention is not limited thereto.

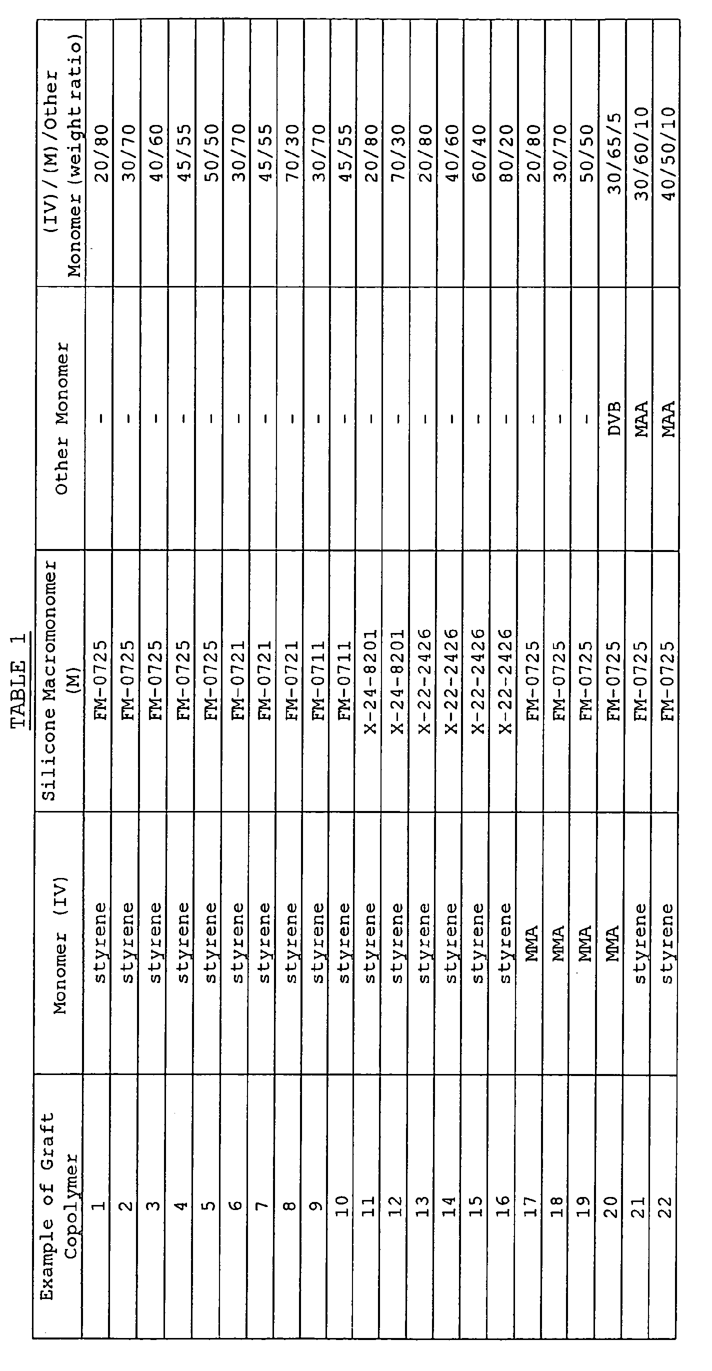

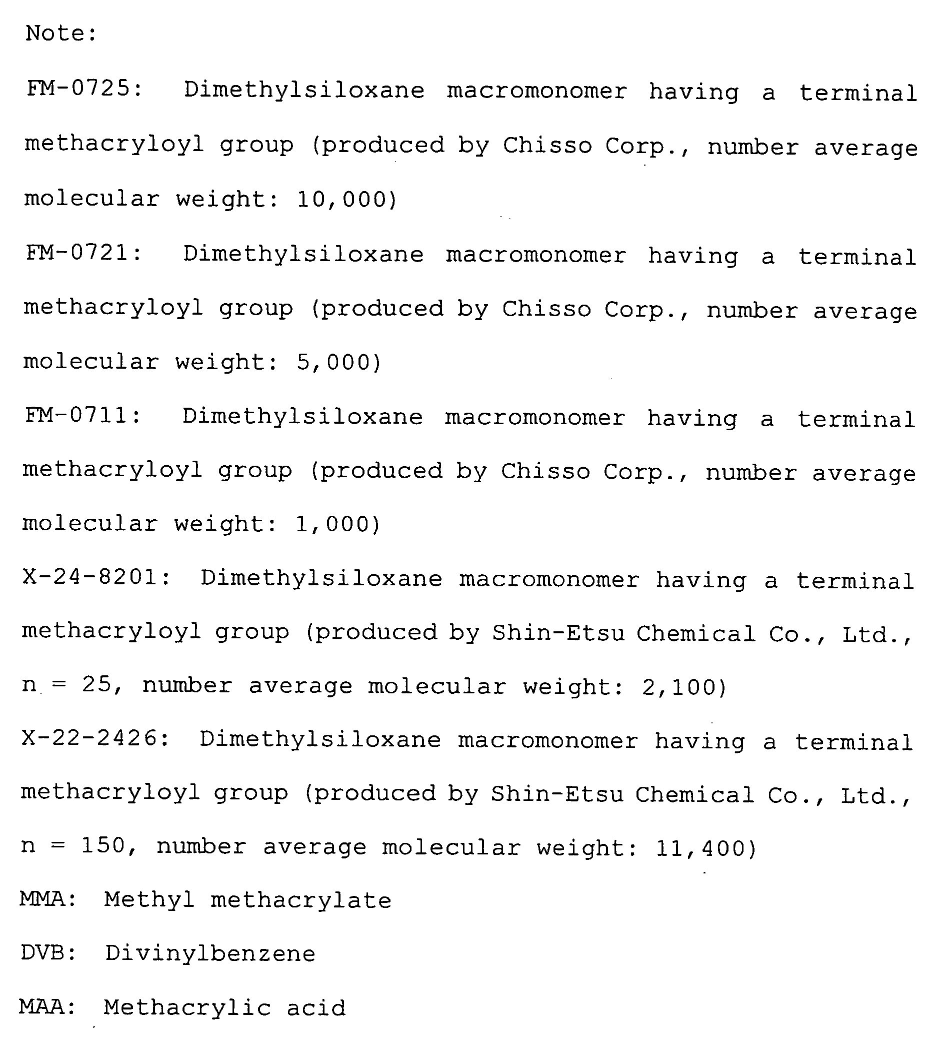

It is preferred in the invention to use a resin (binder resin) that is insoluble or swellable in the non-aqueous solvent in order to improve dispersibility throughmixing with a colorant or to improve fixing property of the colorant. Examples of the resin include various kinds of natural and synthetic resins, for example, an olefin polymer or copolymer (such as polyethylene, polypropylene, polyisobutyrene, an ethylene-vinyl acetate copolymer, an ethylene-acrylate copolymer, an ethylene-methacrylate copolymer and an ethylene-methacrylic acid copolymer), a polymer or copolymer of styrene or a derivative thereof (such as a butadiene-styrene copolymer, an isoprene-styrene copolymer, a styrene-methacrylate copolymer and a styrene-acrylate copolymer), a polymer or copolymer of an acrylate ester, a polymer or copolymer of a methacrylate ester, apolymer or copolymer of an itaconate diester, amaleic anhydride copolymer, a rosin resin, a hydrogenated rosin resin, a petroleum resin, a hydrogenated petroleum resin, a maleic acid resin, a terpene resin, a hydrogenated terpene resin, a chroman-indene resin, a cyclized rubber-methacrylate ester copolymer and a cyclized rubber-acrylate ester copolymer.

Preferred examples of the resin include a random copolymer having a part that is solvated with the solvent, a part that is difficult to be solvated with the solvent and a part having a polar group, and a graft copolymer disclosed in JP-A-3-188469, in order to adsorb to the colorant particles prepared by dispersing a pigment in a resin insoluble in a dispersion medium, and to have a function of dispersing in the non-aqueous solvent. Examples of the monomer that is solvated with the solvent after polymerization include lauryl methacrylate, stearyl methacrylate, 2-ethylhexyl methacrylate and cetyl methacrylate. Examples of the monomer that is difficult to be solvated with the solvent after polymerization include methyl methacrylate, ethyl methacrylate, isopropyl methacrylate, styrene and vinyltoluene. Examples of the monomer having a polar group include an acidic group-containingmonomer, such as acrylic acid, methacrylic acid, itaconic acid, fumaric acid, maleic acid, styernesulfonic acid and an alkali salt thereof, and a basic group-containing monomer, such as dimethylaminoethyl methacrylate, diethylaminoethyl methacrylate, vinylpyridine, vinylpyrrolidone, vinylpiperidine and vinyllactam.

The binder resin is ordinarily used in an amount of from 0.3 to 10 parts by weight per 1 part by weight of the colorant (pigment), preferably the binder resin is used in an amount of from 0.4 to 7 parts by weight per 1 part by weight of the colorant, and more preferably the binder resin is used in an amount of from 0. 5 to 5 parts by weight per 1 part by weight of the colorant. In the case where the binder resin is used in an amount of 0.3 part by weight or more per 1 part by weight of the colorant, the pigment dispersion effect upon kneading can be obtained. In the case where the binder resin is used in an amount of 10 parts by weight or less, the pigment concentration in the ink composition is not largely lowered to provide a necessary image density.

The basic constitutions of the ink composition of ink-j et system and the electrophotographic liquid developer according to the invention have been described above, but a surface active agent and various kinds of additives may be incorporated into the ink composition or liquid developer, if desire.

The ink composition of the invention may contain various kinds of additives, if desired. The additives are appropriately selected and added to the ink composition under consideration of an ink-jet system and materials and structures of an ink-jet discharge head, an ink supplying section and an ink circulating section. For example, additives described in T. Amari (supervised), Ink-jet Printer Gijutsu to Oyo (Techniques and Applications of Ink-jet Printers), chap. 17 (1998), published by CMC Publishing Co., Ltd. can be used.

Specific examples thereof include a metallic salt of an aliphatic acid (such as a monocarboxylic acid having from 6 to 32 carbon atoms and a polybasic acid, e.g., 2-ethylhexynic acid, dedecenylsuccinic acid, butylsuccinic acid, 2-ethylcaproic acid, lauric acid, palmitic acid, elaidic acid, linolenic acid, recinoleic acid, oleic acid, stearic acid, enanthic acid, naphthenic acid, ethylenediaminetetraacetic acid, abietic acid, dehydroabietic acid and hydrogenated rosin), resin acid, an alkylphthalicacid, analkylsalicylicacidandthelike (examples of a metal of the metallic ion include Na, K, Li, B, Al, Ti, Ca, Pb, Mn, Co, Zn, Mg, Ce, Ag, Zr, Cu, Fe and Ba), a surface active compound (such as an organic phosphoric acid or a salt thereof, e.g., mono-, di- or trialkylphosphoric acid containing an alkyl group having from 3 to 18 carbon atoms, an organic sulfonic acid or a salt thereof, e.g., a long chain aliphatic sulfonic acid, a long chain alkylbenzenesulfonic acid, a dialkylsulfosuccinic acid and a metallic salt thereof, and an amphoteric surface active compound, e.g., a phospholipid, e.g., lecithin and cephalin), a surface active agent containing an alkyl group having a fluorine atom and/or a dialkylsiloxane bond group, an aliphatic alcohol (such as a higher alcohol containing a branched alkyl group having from 9 to 20 carbon atoms, benzyl alcohol, phenethyl alcohol and cyclohexyl alcohol) , a polyhydric alcohol (such as an alkylene glycol having from 2 to 18 carbon atoms, e.g., ethylene glycol, 1,2-propylene glycol, 1,3-propylene glycol, 1,4-butanediol, neopentyl glycol; 1,6-hexanediol and dodecanediol), an alkylene ether glycol having from 4 to 1, 000 carbon atoms (such as diethylene glycol, triethylene glycol, dipropylene glycol, polyethylene glycol, polypropylene glycol and polytetramethylene ether glycol), an alicyclic diol having from 5 to 18 carbon atoms (such as 1,4-cyclohexanedimethanol and hydrogenated bisphenol A), an adduct of a bisphenol having from 12 to 23 carbon atoms (such as bisphenol A, bisphenol F and bisphenol S) with an alkylene oxide having from 2 to 18 carbon atoms (such as ethylene oxide, propylene oxide, butylene oxide and an α-olefin oxide), a polyol, such as glycerin, trimethylolethane, trimethylolpropane, pentaerythritol and sorbitol, a polyphenol of trivalence or higher valence (such as trisphenol PA, phenol novolak and cresol novolak), an adduct of the aforementioned polyphenol of trivalence or higher valence with an alkylene oxide having from 2 to 18 carbon atoms (with an addition molar number of from 2 to 20), an ether derivative of the aforementioned polyvalent alcohol (such as a polyglycol alkyl ether and an alkylaryl polyglycol ether) , a fatty acid ester derivative of a polyvalent alcohol, an ether oleate derivative of a polyvalent alcohol (such as ethylene glycol monoethyl acetate, diethylene glycol monobutyl acetate, propylene glycol monobutyl propionate and sorbitan monomethyl dioxalate), an alkylnaphthalene sulfonate and an alkyl aryl sulfonate, but the invention is not limited to these compounds. The using amount of the additives is preferably adjusted to such an amount that the ink composition has a surface tension of from 15 to 60 mN/m at 25°C and a viscosity of from 1.0 to 40 cP.

The liquid developer of the invention contains a charge controlling agent in order to strengthen the charge characteristics or to improve the image characteristics.

The charge controlling agent for the liquid developer used in the invention include those conventionally known. Examples thereof include a metallic salt of a fatty acid, such as naphthenic acid, octenic acid, oleic acid and stearic acid, a metallic salt of a sulfosuccinate ester, an oil soluble sulfonic acid metallic salt disclosed in JP-B-45-565, JP-A-52-37435 and JP-A-52-37049, a phosphate ester metallic salt described in JP-B-45-9594, a metallic salt of abietic acid or hydrogenated abietic acid disclosed in JP-B-48-25666, a calcium salt of an alkyl benzene sulfonic acid disclosed in JP-B-55-2620, a metallic salt of an aromatic carboxylic acid or sulfonic acid disclosed in JP-A-52-107837, JP-A-52-38937, JP-A-57-90643 and JP-A-57-139753, a nonionic surface active agent, such as a polyoxyethylated alkylamine, a fat, such as lecithin and linseed oil, polyvinylpyrrolidone, an organic acid ester of a polyhydric alcohol, a phosphate ester surface active agent disclosed in JP-A-57-210345, and a sulfonic acid resin disclosed in JP-B-56-24944. An amino acid derivative disclosed in JP-A-60-21056 and JP-A-61-50951 can also be used. Examples thereof also include a copolymer containing a maleic acid half-amide component disclosed in JP-A-60-173558 and JP-A-60-179750. Examples thereof further include a quaternarized amine polymer disclosed in JP-A-54-31739 and JP-A-56-24944.

Preferred among these includes a metallic salt of naphthenic acid, a metallic salt of dioctylsulfosuccinic acid, a copolymer containing a maleic acid half-amide component, lecithin and an amino acid derivative. The charge controlling agent may be used in combination of two or more thereof. The charge controlling agent preferably used in an amount of from 0.001 to 10.0 parts by weight per 1, 000 parts by weight of the non-aqueous solvent. Various additives may further be added, if desired, and the upper limit of the total amount of the additives is restricted by the electric resistance of the liquid developer. That is, an image with good continuous gradation cannot be obtained in the case where the electric resistance of the liquid developer, from which toner particles have been removed, is lower than 10⁹ Ωcm, and therefore, it is necessary that the addition amounts of the respective additives be controlled within the range.

The production process of the ink will be described. An ordinary method that is known as aproductionprocess for apigment ink can be used for producing the ink. For example, colorant particles obtained by covering a colorant with a resin can be producedby covering the colorant with the resin to form a coloring mixture, and then dispersing the coloring mixture in a non-aqueous solvent to a form of fine particles. The step for producing the coloring mixture by covering a colorant with a resin will be firstly described. The coloring mixture can be produced, for example, in the following manners.
(1) The colorant and the resin are melted and kneaded at a temperature higher than the softening point of the resin in a kneading device, such as a roll mill, a Banbury mixer and a kneader, and after cooling, the mixture is pulverized to obtain the coloring mixture.
(2) The resin is dissolved in a solvent, to which the colorant is then added, and the dispersion thus obtained is dispersed in a wet state in a ball mill, an attritor, a sand grinder or the like, followedby evaporating the solvent, thereby obtaining the coloring mixture. In alternative, the dispersion is poured in a nonsolvent of the resin to precipitate a mixture, which is then dried to obtain the coloring mixture.
(3) A water-containing paste (wet cake) of the pigment is kneaded with the resin or a solution of the resin by a flashing method to substitute water with the resin or the resin solution, and then water and the solvent are removed by drying under a reduced pressure to obtain the coloring mixture.

The step for dispersing the coloring mixture in the non-aqueous solvent to a form of fine particles will be described.

In the dispersing step, the pigment dispersant according to the invention is used for dispersing the coloring mixture in a form of fine particles and for stabilizing the dispersed state in the non-aqueous solvent. The method for using the pigment dispersant with the coloring mixture includes the following methods.
1. A pigment composition having been formed by mixing the coloring mixture and the pigment dispersant is added and dispersed in the non-aqueous solvent.
2. The coloring mixture and the pigment dispersant are separately added and dispersed in the non-aqueous solvent.
3. Dispersions of the coloring mixture and the pigment dispersant in the non-aqueous solvent are separately produced, and the dispersions are then mixed.
4. The coloringmixture is dispersed in the non-aqueous solvent, and the pigment dispersant is added to the resulting pigment dispersion.

The intended effects can be obtained by any of the aforementioned method.

Examples of the machine used for mixing or dispersing the coloring mixture in the non-aqueous solvent include a dissolver, a high-speed mixer, a homomixer, a kneader, a ball mill, a roll mill, a sandmill and an attritor. The colorant particles formed by dispersing the coloring mixture preferably have an average particle diameter in a range of from 0.01 to 10 µm, more preferably from 0.01 to 3 µm, and particularly preferably from 0.01 to 1.0 µm.

The silicon graft copolymer of the invention used in the aforementioned dispersing step is preferably from 10 to 300 parts by weight per 100 parts by weight of the pigment. In the case where the addition amount of the silicone graft copolymer is 10 parts by weight or more, the dispersion effect of the pigment is improved, and in the case where it is 300 parts by weight or less, it is excellent in both dispersion effect and cost.

The ink composition for ink-jet system according to the invention can be used as an oil-based ink in various kinds of ink-j et recording systems, and examples of the ink-j et recording systems include an ink-jet printer of the piezoelectric system or an electrostatic system represented by the slit-jet developed by Toshiba Corp. and NTT Corp., and an ink-jet printer of the thermal system.

The invention will be described in more detail with reference to the following examples, but the invention should not be construed as being limited thereto.

### Production Example 1 of Silicone Graft Copolymer (Graft Copolymer 2)

300 g of toluene, 60 g of styrene and 140 g of FM-0725 (produced by Shin-Etsu Chemical Co., Ltd.) as a silicone macromonomer were placed in a 1L round bottom flask equipped with a reflux condenser and stirring blades, and after heating to 90°C under a nitrogen stream, 2 g of 1,1'-azobis(1-cyclohexanecarbonitrile) was added thereto as a polymerization initiator, followed by conducting a polymerization reaction at 90°C for 4 hours. Thereafter, 1.0 g of the initiator was added and reacted for 10 hours, and 0.5 g of the initiator was further added and reacted for 10 hours. After completing the polymerization, the reaction mixture was cooled to room temperature and added with 200 g of toluene, and the mixture was reprecipitated in 10 L of methanol. After filtration, the resulting white powder was dried to obtain 182 g of Graft Copolymer 2 of the silicone graft copolymer as white powder. The resin as Graft Copolymer 2 had a weight average molecular weight of 4.5 x 10⁴. A solution obtained by dissolving the resin of Graft Copolymer 2 in an amount of 20% by weight in Isopar G, produced by Exxon Chemical Corp., was white.

### Production Examples 2 to 10 of Silicone Graft Copolymer (Graft Copolymers 3 to 7, 9 to 12, 15 and 19)

The same procedures as in Production Example 1 of Silicone Graft Copolymer were carried out except that the styrene (as the monomer represented by the formula (IV)) and silicone macromonomer (M) were replaced by those shown in Table 2 below, so as to obtain Graft Copolymers 3 to 7, 9 to 12, 15 and 19. The weight average molecular weights of the resulting graft copolymers are shown in Table 2. Solutions obtained by dissolving the resins of Example Graft Copolymers 3 to 7, 9 to 12, 15 and 19 each in an amount of 20% by weight in Isopar G, produced by Exxon Chemical Corp. were transparent to white, respectively.

**TABLE 2**

| Production Example | Graft Copolymer | Weight average molecular weight |
|---|---|---|
| 1 | 2 | 45,000 |
| 2 | 3 | 35,000 |
| 3 | 4 | 37,000 |
| 4 | 5 | 48,000 |
| 5 | 6 | 50,000 |
| 6 | 7 | 53,000 |
| 7 | 9 | 50,000 |
| 8 | 10 | 74,000 |
| 9 | 11 | 55,000 |
| 10 | 12 | 51,000 |
| 11 | 15 | 49,000 |
| 12 | 19 | 43,000 |

### Production Examples 1 and 2 of Comparative Pigment Dispersant (R-1 and R-2)

The same procedures as in Production Example 1 of Silicone Graft Copolymer were carried out except that the silicone macromonomer FM-0725 was replaced with a silicone macromonomer TM-0701 (produced by Shin-Etsu Chemical Co., Ltd.) having a number average molecular weight of 423, so as to produce Comparative Pigment Dispersant R-1. The same procedures as in Production Example 1 of Silicone Graft Copolymer were carried out except that 90 g of styrene and 110 g of the silicone macromonomer TM-0701 (produced by Shin-Etsu Chemical Co., Ltd.) were used, so as to produce Comparative Pigment Dispersant R-2. Comparative Pigment Dispersants R-1 and R-2 had weight average molecular weights of 5.7 x 10⁴ and 11.0 x 10⁴, respectively.

### Production Example 3 of Comparative Pigment Dispersant (R-3)

Amixture of 45 g of styrene, 55g of a stearyl methacrylate macromonomer having a methacryloyl group at the terminal thereof (Mw: 12, 100; structure: shown below) and 200 g of toluene was placed in a four-neck flask and heated to a temperature of 80°C under a nitrogen stream and stirring. 1 g of 1,1'-azobis(1-cyclohexanecarbonitrile) was added as a polymerization initiator, and the mixture was polymerized at 80°C for 24 hours. After completing the polymerization, the reaction mixture was cooled to room temperature and added with 200 g of toluene, and the mixture was reprecipitated in 4 L of methanol. After filtration, the resulting white powder was dried to obtain 92 g of Comparative Pigment Dispersant R-3 having a weight average molecular weight of 6.6 x 10⁴.

### Comparative Pigment Dispersant R-3

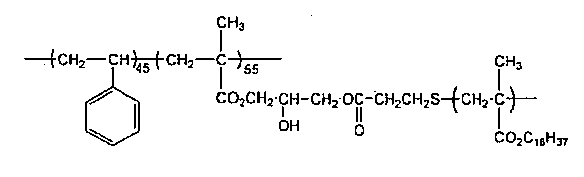

### Production Example 4 of Comparative Pigment Dispersant (R-4)

The same procedures as in Production Example 3 of Comparative Pigment Dispersant were carried out except that 30 g of styrene and 70 g of the stearyl methacrylate macromonomer having amethacryloyl group at the terminal thereof (Mw: 12,100), so as to obtain 90 g of Comparative Pigment Dispersant R-4 having a weight average molecular weight of 5.7 x 10⁴.

### Example 1 (Ink Composition IJ-1)

100 parts by weight of Lionel Blue FG-7350 (Pigment Blue 15:3, produced by Toyo Ink Mfg. Co., Ltd.) as a blue pigment and 100 parts by weight of a styrene-vinyltoluene-lauryl methacrylate-trimethylammoniumethyl methacrylate copolymer (anion: p-toluenesulfonic acid) (molar ratio: 47/47/1/5) as a resin was well mixed in a Trio Blender after preliminary pulverization, and then melted and kneaded in a desktop kneader PBV (produced by Irie Shokai Co., Ltd.) heated to 100°C for 120 minutes. 10 parts by weight of the resulting pigment mixture, 70.0 parts by weight of Isopar G and 25 parts by weight of a 20% by weight solution prepared by dissolving Silicone Graft Copolymer 7 as a pigment dispersant in Isopar G under heating were dispersed along with 250 parts by weight of glass beads 3G-X in a paint shaker (produced by Toyo Seiki Kogyo Co., Ltd.) for 6 hours. The volume average particle diameter of the pigment resin particles in the resulting dispersion was 0.22 µm as measured with an ultracentrifuge automatic grain size distribution measuring machine CAPA700 (produced by Horiba, Ltd.), which indicated dispersion in good condition.

After removing the glass beads by filtration, the pigment resin particle dispersion thus obtained was once concentrated by removing the solvent, and then diluted with Isopar G to prepare Ink Composition IJ-1. Ink Composition IJ-1 thus obtained had a pigment resin particle concentration of 14.3% by weight, a viscosity of 13.0 cP (measured with an E-type viscometer at 25°C) and a surface tension of 23 mN/m (measured with an automatic surface tension meter, produced by Kyowa Interface Science Co., Ltd., at 25°C).

Ink Composition IJ-1 was charged in a color facsimile machine, Saiyuki UX-E1CL, produced by Sharp Corp. as an ink-jet recording apparatus, and an image was printed on ink-jet high grade paper, produced by Fuji Photo Film Co., Ltd. As a result, the ink composition was stably discharged withoutnozzle clogging. The resulting image was sharp and free of blur, and had good quality with an image density of 1.5. Further, a solid pattern was printed on the paper, and after drying, the solid pattern wasrubbedbyfingers. As a result, lack of image was not observed at all and excellent abrasion resistance was obtained. The ink composition maintained the good dispersed state without precipitation and aggregation even after storage for 6 months at ambient temperature.

The evaluation criteria are shown below.

### Dispersion Stability of Ink

An ink after preparation was allowed to stand in a container at 35°C for 1 month. The container was shaken several times with hand, and then the particle size (grain size distribution measuringmachineCAPA700) andthepresenceofaggregatedmatters were evaluated.
- A:: The particle size was not changed, and no aggregated matter was found.
- B:: The particle size was slightly increased, and small aggregated matters were found.
- C:: The particle size was largely increased, and large amounts of aggregated matters of various sizes were found.

### Discharge stability of Ink

- A:: No clogging occurred after continuous discharge for 24 hours.
- B:: Clogging occurred to stop discharge after two to three hours.
- C:: Clogging occurred to stop discharge within one hour.

### Image Quality

- A:: Neither blur nor image defect were found.
- B:: No blur was found, but image defect was partially found.
- C:: Blur and image defect were found to provide a defective image.

### Abrasion Resistance of Image

- A:: The lack of image upon the rubbing by fingers was not recognized at all.
- B:: The lack of image upon the rubbing by fingers was slightly recognized.
- C:: The lack of image upon the rubbing by fingers was readily recognized.

### Comparative Examples 1 and 2 (Comparative Ink Compositions IJR-1 and IJR-2)

In order to compare Silicone Graft Copolymer 7 having the composition of styrene/silicone macromonomer (45/55 by weight) according to the invention used as the pigment dispersant in Example 1, Comparative Ink Compositions IJR-1 and IJR-2 were produced in the samemanner as in Example 1 except that Comparative Pigment Dispersion R-2, a random copolymer prepared by using a silicone monomer, and Comparative Pigment Dispersant R-3, a graft copolymer using a stearyl methacrylate macromonomer, were used, respectively, instead of Example Silicone Graft Copolymer 7 used as the pigment dispersant in Example 1, in the same compositional ratio. The surface tension of each of the ink compositions was 23 mN/m, and the viscosity thereof was adjusted to 13 cP by controlling the pigment resin particle concentration. The results of evaluation of Comparative Ink Compositions IJR-1 and IJR-2 are also shown in Table 3 below.

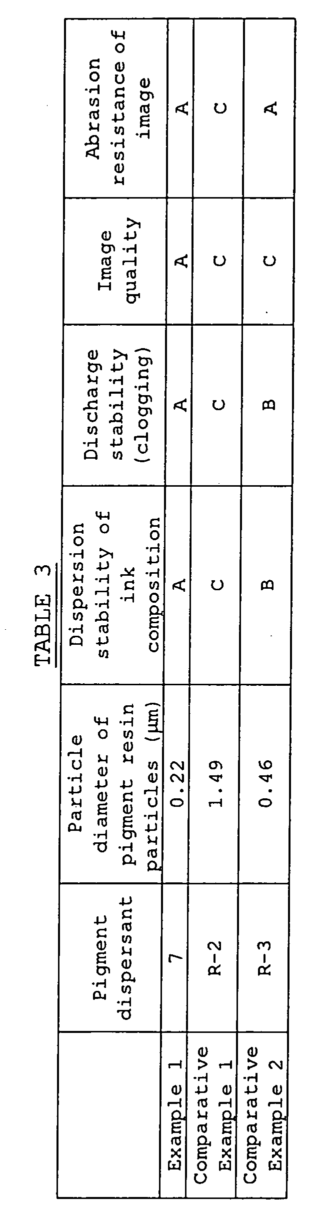

### Example 2 (Ink Composition IJ-2)

Ink Composition IJ-2 was produced in the same manner as in Example 1 except that Silicone Graft Copolymer 2 as the pigment dispersant according to the invention was used instead of Silicone Graft Copolymer 7 used in Example 1. The surface tension of Ink Composition IJ-2 was 23 mN/m, and the viscosity thereof was adjusted to 13 cP by controlling the pigment resin particle concentration. The volume average particle diameter of the pigment resin particles in the dispersion of Ink Composition IJ-2 was 0.38 µm, which indicated dispersion in good condition. The evaluation of Ink Composition IJ-2 in the same manner as in Example 1 revealed that the ink was stably discharged for a long period of time without nozzle clogging, and a resulting image was sharp and free from blur and had good quality with a sufficient image density. It was also found that a solid pattern was excellent in abrasion resistance. Ink Composition IJ-2 maintained the good dispersed state without precipitation and aggregation even after storage for 6 months at ambient temperature.

### Comparative Examples 3 and 4 (Comparative Ink Compositions IJR-3 and IJR-4)

In order to compare Silicone Graft Copolymer 2 having the composition of styrene/silicone macromonomer (30/70 by weight) according to the invention used as the pigment dispersant in Example 2, Comparative Ink Compositions IJR-3 and IJR-4 were produced in the same manner as in Example 2 except that Comparative Pigment Dispersion R-1, a random copolymer prepared by using a silicone monomer, and Comparative Pigment Dispersant R-4, a graft copolymer using a stearyl methacrylate macromonomer, were used, respectively, instead of Silicone Graft Copolymer 2 used as the pigment dispersant in Example 2, in the same compositional ratio. The surface tension of each of the ink compositions was 23 mN/m, and the viscosity thereof was adjusted to 13 cP by controlling the pigment resin particle concentration. The results of evaluation of Comparative Ink Compositions IJR-3 and IJR-4 are also shown in Table 4 below.

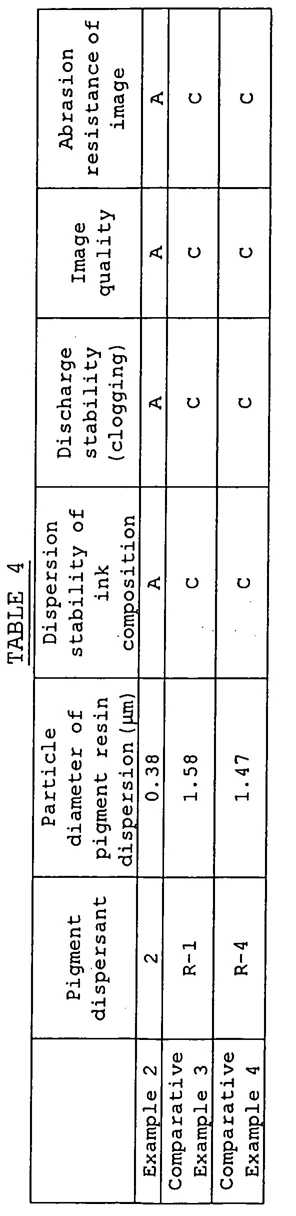

It is understood from the results in Tables 3 and 4 that Ink Compositions IJ-1 and IJ-2, which use the silicone graft copolymer containing the silicone macromonomer of the invention, is excellent in dispersion stability owing to the pigment resin particles having been finely dispersed, is excellent in discharge stability without nozzle clogging, provides a sharp image with good quality without ink blur, and is excellent in abrasion resistance of the image.

On the other hand, Comparative Ink Compositions IJR-1 to IJR-4, which use the random copolymer using the silicone monomer or the graft copolymer using the stearyl methacrylate macromonomer instead of the silicone macromonomer in the same compositional ratio, as the comparative pigment dispersant, cause significant aggregation even after storage for a short period of time due to the presence of coarse pigment resin particles. The discharge stability of the ink compositions is deteriorated for a few hours of the continuous discharge to cause nozzle clogging, and the occurrence of blur and lack of image was observed in the images obtained. The abrasion resistance of the images is also deteriorated since the solid pattern of the image is dropped upon rubbing by fingers.

It is understood from the aforementioned results that the ink composition, which uses the silicone graft copolymer containing the silicone macromonomer of the invention, contains the pigment finely dispersed and is excellent in dispersion stability, so as to exhibit good ink capability.

### Examples 3 to 10 (Ink Compositions IJ-3 to IJ-10)

Ink Compositions IJ-3 to IJ-10 were produced in the same manner as in Example 1 except that the silicone graft copolymers shown in Table 5 below as the pigment dispersants according to the invention were used instead of Example Silicone Graft Copolymer 7 used in Example 1, respectively. Ink Compositions IJ-3 to IJ-10 each had a surface tension of 23 mN/m. The viscosities thereof were adjusted in a range of from 10 to 14 cP by controlling the pigment resin particle concentrations, respectively. The volume average particle diameters of the pigment resin particles in the dispersions of Ink Compositions IJ-3 to IJ-10 are shown in Table 5. The evaluation of imaging capability of Ink Compositions IJ-3 to IJ-10 in the same manner as in Example 1 revealed that the ink compositions were stably discharged for a long period of time without nozzle clogging, and resulting images were sharp and free from blur and had good quality with a sufficient image density. It was also found that solid patterns were excellent in abrasion resistance. Ink Compositions IJ-3 to IJ-10 maintained the good dispersed state without precipitation and aggregation even after storage for 6 months at ambient temperature.

**TABLE 5**

| Ink Composition | Example of pigment dispersant | Volume average particle diameter (µm) |
|---|---|---|
| IJ-3 | 3 | 0.22 |
| IJ-4 | 4 | 0.25 |
| IJ-5 | 5 | 0.24 |
| IJ-6 | 6 | 0.39 |
| IJ-7 | 14 | 0.24 |
| IJ-8 | 15 | 0.21 |
| IJ-9 | 17 | 0.20 |
| IJ-10 | 22 | 0.26 |

### Example 11 (Ink Composition IJ-11)

After producing a pigment mixture in the same manner as in Example 1, it was dispersed by using silicone oil as a non-aqueous solvent instead of Isopar G. 5 parts by weight of the pigment mixture, 75 parts by weight of silicone oil, KF96L-1.5, produced by Shin-Etsu Silicone Co., Ltd., 25 parts by weight of a 20% by weight solution prepared by dissolving under heating Silicone Graft Copolymer 2 in silicone oil KF96L-1.5 as a pigment dispersant were dispersed along with 250 parts byweight of glass beads 3G-X in apaint shaker (produced by Toyo Seiki Kogyo Co., Ltd.) for 6 hours. After removing the glass beads by filtration, the pigment resin particle dispersion thus obtained was once concentrated by removing the solvent, and then diluted with silicone oil KF96L-1. 5 to prepare Ink Composition IJ-11. Ink Composition IJ-11 thus obtained had a pigment resin particle concentration of 13.3% by weight, a viscosity of 13.5 cP and a surface tension of 17 mN/m. Ink Composition IJ-11 was then charged in an ink-jet coating experimental apparatus, MJP-1500, produced by Microjet Co., Ltd., and an image was printed on ink-jet high grade paper, produced by Fuji Photo Film Co., Ltd. to evaluate the imaging capability. The ink composition was stably discharged without nozzle clogging for a long period of time. The resulting image had a sufficient image density and was sharp and of good quality. Ink Composition IJ-11 maintained the good dispersed state without precipitation and aggregation even after storage for 6 months at ambient temperature.

### Comparative Examples 5 and 6 (Comparative Ink Compositions IJR-5 and IJR-6)

In order to compare the pigment dispersant using the silicone graft copolymer of the invention, Comparative Ink Compositions IJR-5 and IJR-6 were produced in the same manner as in Example 11 except that Comparative Pigment Dispersants R-3 and R-4, graft copolymers using a stearyl methacrylate macromonomer were used instead of Silicone Graft Copolymer 2 used as the pigment dispersant in Example 11. Comparative Pigment Dispersions R-3 and R-4 could not well disperse the pigment mixture because they had low solubility in silicone oil, KF96L-1.5 and thus, the comparative ink compositions containing coarse particles could not be subjected to the subsequent evaluations.

It is understood from the results of Example 11 and Comparative Examples 5 and 6 that only the ink composition using the silicone graft copolymer containing the silicone macromonomer of the invention as the pigment dispersant for a silicone oil solvent system disperses a pigment in fine particles and is excellent in dispersion stability, so as to exhibit good ink capability.

### Examples 12 to 15 (Ink Compositions IJ-12 to IJ-15)

Ink Compositions IJ-12 to IJ-15 were produced in the same manner as in Example 11 except that the silicone graft copolymers shown in Table 6 below as the pigment dispersants according to the invention were used instead of Silicone Graft Copolymer 2 used in Example 11, respectively. Ink Compositions IJ-12 to IJ-15 each had a surface tension of 17 mN/m. The viscosities thereof were adjusted in a range of from 10 to 14 cPby controlling the pigment resin particle concentrations, respectively. The volume average particle diameters of the pigment resin particles in the dispersions of Ink Compositions IJ-12 to IJ-15 are shown in Table 6. The evaluation of imaging capability of Ink Compositions IJ-12 to IJ-15 in the same manner as in Example 1 revealed that the ink compositions were stably discharged for a long period of time without nozzle clogging, and resulting images were sharp and free from blur and had good quality with a sufficient image density. Ink Compositions IJ-12 to IJ-15 maintained the good dispersed state without precipitation and aggregation even after storage for 6 months at ambient temperature.

**TABLE 6**

| Ink Composition | Example of pigment dispersant | Volume average particle diameter (µm) |
|---|---|---|
| IJ-12 | 4 | 0.18 |
| IJ-13 | 6 | 0.29 |
| IJ-14 | 7 | 0.19 |
| IJ-15 | 14 | 0.20 |

### Example 16 (Ink Composition IJ-16)

The blue pigment resin particle dispersion in Example 1 was diluted with Isopar G to a resin particle component concentration of 6.0% by weight. Octadecene-semimaleic octadecylamide copolymer was added thereto as a charge controlling agent to an amount of 0.005 g per 1 L of Isopar G, so as to produce Ink Composition IJ-16. Ink Composition IJ-16 was measured for a charge amount with a development characteristic measuring apparatus described in JP-B-64-696 (measured in terms of an initial value of the time change of the voltage induced on the backside of an electrode applied a voltage of 500 V). It was found that Ink Composition IJ-16 exhibited clear positive charge characteristics, i.e., a total charge of 250 mV and a charge of blue resin particles of 212 mV, and the charge amount is quite stable with substantially no change after 1 month. It was also found that the charge amount could be easily controlled with the amount of the charge controlling agent. Ink Composition IJ-16 as an electrophotographic liquid developer was subjected to a printing test by using a wet type copier, DT-2500, produced by Ricoh Co., Ltd., and thus an image having a sufficient density and good fixing property could be obtained. The electrophotographic developer suffered significantly small change in the charge with the lapse of time and was excellent in redispersibility and storage stability.

According to the invention, a pigment dispersant for non-aqueous solvent is provided that can be applied to various kinds of pigments without limitation, can disperse a colorant coated with a fixing resin in a non-aqueous solvent in good condition, and can be easily produced.

According to the invention, an ink composition for an ink-j et system is also provided that contains apigment uniformly dispersed as fine particles, is excellent in dispersion stability of a pigment, and causes less clogging at a nozzle section with high discharge stability.

According to the invention, an ink composition for an ink-jet system is also provided that is excellent in drying property on recording paper and water resistance and light resistance of a recorded image, has high abrasion resistance, and is capable of printing a large number of printed matters having a sharp color image with good quality without ink blur.

According to the invention, an electrophotographic liquid developer is also provided that is excellent in dispersion stability and abrasion resistance, is excellent in control of charge polarity and in time-lapse stability of charge, and is capable of printing a large number of printed matters having a sharp color image with good quality without ink blur.

The entire disclosure of each and every foreign patent application from which the benefit of foreign priority has been claimed in the present application is incorporated herein by reference, as if fully set forth herein.

While the invention has been described in detail and with reference to specific embodiments thereof, it will be apparent to one skilled in the art that various changes andmodifications can be made therein without departing from the spirit and scope thereof.

## Claims

1. A pigment dispersantfor non-aqueoussolvent,which is soluble in a non-aqueous solvent and comprises a silicone graft copolymer comprising a repeating unit derived from a macromonomer soluble in a non-aqueous solvent and a repeating unit derived from a monomer, which is copolymerizable with the macromonomer and forms a non-aqueous solvent-insoluble backbone of the silicone graft copolymer, wherein the macromonomer is a silicone macromonomer (M) having a polymerizable functional group at the terminal thereof.

2. The pigment dispersant for non-aqueous solvent as claimed in claim 1, wherein the silicone macromonomer (M) is a macromonomer having a number average molecular weight of from 1 x 10³ to 4 x 10⁴ that comprises a silicone polymer main chain comprising a repeating unit representedby the following formula (II) and has a polymerizable double bond group represented by the following formula (I) at the terminal thereof: 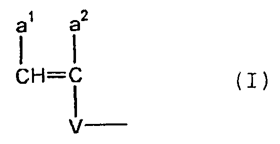 wherein V represents -COO-, -COO-(CH₂)ₘ-, -OCO-, -(CH₂)ₖ-OCO-, -OCO(CH₂)ₘ-, -(CH₂)ₖ-COO-, -O-, -CONHCOO-, -CONHCO-, -CONH(CH₂)ₘ-, -SO₂-, -CO-, -CONZ¹-, -SO₂NZ¹- or a phenylene group; Z¹ represents a hydrogen atomor a hydrocarbon group; m represents an integer of from 1 to 10; k represents an integer of from 1 to 3; a¹ and a², which may be the same or different, each represents a hydrogen atom, a halogen atom, a cyano group, a hydrocarbon group, -COO-Z² or a -COO-Z² connected via a hydrocarbon group; and Z² represents a hydrogen atom or a substituted or unsubstituted hydrocarbon group, 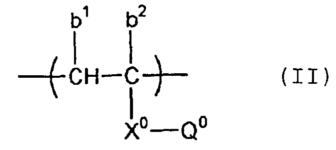 wherein X⁰ represents a linking group comprising at least one of -COO-,-OCO-, -(CH₂)ₖ-OCO-, -(CH₂)ₖ-COO-, -O-, -CONHCOO-, - CONHCO-, -SO₂-, -CO-, -CONZ³- and -SO₂NZ³-; Z³ represents a hydrogen atom or a hydrocarbon group; b¹ and b², which may be the same or different, each has the same meaning as a¹ or a² in formula (I); k represents an integer of from 1 to 3; and Q⁰ represents an aliphatic group having from 1 to 22 carbon atoms and having a silicon atom-containing substituent.

3. The pigment dispersant for non-aqueous solvent as claimed in claim 1, wherein the silicone macromonomer (M) is a macromonomer having a number average molecular weight of from 1 x 10³ to 4 x 10⁴ and represented by the following formula (V) : 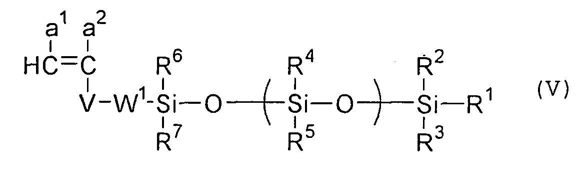 wherein V represents -COO-, -COO- (CH₂)ₘ-, -OCO-, - (CH₂)ₖ-OCO-, - OCO(CH₂)ₘ-, -(CH₂)ₖ-COO-, -O-, -CONHCOO-, -CONHCO-, -CONH(CH₂)ₘ-, -SO₂-, -CO-, -CONZ¹-, -SO₂NZ¹- or a phenylene group; Z¹ represents a hydrogen atomor a hydrocarbon group; m represents an integer of from 1 to 10; k represents an integer of from 1 to 3; a¹ and a², which may be the same or different, each represents a hydrogen atom, a halogen atom, a cyano group, a hydrocarbon group, -COO-Z² or a -COO-Z² connected via a hydrocarbon group; Z² represents a hydrogen atom or a substituted or unsubstituted hydrocarbon group; W¹ represents a single bond or a linking group comprising at least one of -C(Z⁶)(Z⁷)- (wherein Z⁶ and Z⁷ each represents a hydrogen atom, a halogen atom, a cyano group or a hydroxyl group), -(CH=CH) -, a cyclohexylene group, a phenylene group, -O-, -S-, -C(=O)-, -N(Z⁸)-, -COO-, -SO₂-, -CON(Z⁸)-, -SO₂N(Z⁸)-, -NHCOO-, -NHCONH- and -Si(Z⁸)(Z⁹)-(wherein Z⁸ and Z⁹ each represents a hydrogen atom or a hydrocarbon group) ; and R¹, R², R³, R⁴, R⁵, R⁶ and R⁷, which may be the same or different, each represents an alkyl group having from 1 to 10 carbon atoms, a phenyl group or an aralkyl group having from 7 to 16 carbon atoms.

4. The pigment dispersant for non-aqueous solvent as claimed in claim 1, wherein the non-aqueous solvent is an aliphatic saturated hydrocarbon having a viscosity of 3 cSt or less, a resistivity of 10¹⁰ Ω·cm or more, and a surface tension at 25°C of from 22.5 to 28.0 mN/m.

5. The pigment dispersant for non-aqueous solvent as claimed in claim 1, wherein the non-aqueous solvent is a silicone oil having a viscosity of from 0.5 to 20 cSt, a resistivity of 10¹⁰ Ω·cm or more, and a surface tension at 25°C of from 15 to 21 mN/m.

6. An ink composition for ink-jet system comprising a non-aqueous solvent, a colorant, a resin that is insoluble or swellable in the non-aqueous solvent and a pigment dispersant, wherein the pigment dispersant is the pigment dispersant for non-aqueous solvent as claimed in claim 1.

7. The ink composition for ink-jet system as claimed in claim 6, wherein the non-aqueous solvent is an aliphatic saturated hydrocarbon having a viscosity of 3 cSt or less, a resistivity of 10¹⁰ Ω·cm or more, and a surface tension at 25°C of from 22.5 to 28.0 mN/m.

8. The ink composition for ink-jet system as claimed in claim 6, wherein the non-aqueous solvent is a silicone oil having a viscosity of from 0.5 to 20 cSt, a resistivity of 10¹⁰ Ω·cm or more, and a surface tension at 25°C of from 15 to 21 mN/m.

9. An electrophotographic liquid developer comprising a non-aqueous solvent, a colorant, a resin that is insoluble or swellable in the non-aqueous solvent, a pigment dispersant and a charge controlling agent, wherein the pigment dispersant is the pigment dispersant for non-aqueous solvent as claimed in claim 1.

10. The electrophotographic liquid developer as claimed in claim 9, wherein the non-aqueous solvent is an aliphatic saturated hydrocarbon having a viscosity of 3 cSt or less, a resistivity of 10¹⁰ Ω·cm or more, and a surface tension at 25°C of from 22.5 to 28.0 mN/m.

11. The electrophotographic liquid developer as claimed in claim 9, wherein the non-aqueous solvent is a silicone oil having a viscosity of from 0.5 to 20 cSt, a resistivity of 10¹⁰ Ω·cm or more, and a surface tension at 25°C of from 15 to 21 mN/m.
